# FASCICULE DE BREVET EUROPEEN

(11) **EP 3 895 810 B1**
(45) Date de publication et mention de la délivrance du brevet: **05.03.2025**
(21) Numéro de dépôt: 21168415.4
(22) Date de dépôt: 14.04.2021
(51) Int. Cl.: B05B 15/62

(54) **SUPPORT POUR PULVÉRISATEUR, DISPOSITIF DE PULVÉRISATION COMPRENANT UN TEL SUPPORT ET PROCÉDÉ DE FABRICATION D'UN TEL SUPPORT**
HALTERUNG FÜR EIN SPRÜHGERÄT, SPRÜHVORRICHTUNG MIT EINER SOLCHEN HALTERUNG UND VERFAHREN ZUR HERSTELLUNG EINER SOLCHEN HALTERUNG
SUPPORT FOR SPRAY, SPRAYING DEVICE INCLUDING SUCH A SUPPORT AND METHOD FOR MANUFACTURING SUCH A SUPPORT

(30) Priorité: 15.04.2020 FR 2003783
(43) Date de publication de la demande: 20.10.2021
(73) Titulaire: Exel Industries, 51200 Epernay (FR)
(72) Inventeur: VANZETTO, Denis, 75009 Paris (FR); PERINET, Sylvain, 75009 Paris (FR)
(74) Mandataire: Lavoix

(56) Documents cités:
- CN-A- 108 372 057
- FR-A1- 2 644 322

## Description

La présente invention concerne un support pour pulvérisateur, ainsi qu'un dispositif de pulvérisation comprenant un tel support et un procédé de fabrication d'un tel support.

Il est connu de fixer un pulvérisateur à un robot au sein d'un dispositif de pulvérisation à l'aide d'un support. Ce support est usuellement formé par un assemblage de pièces usinées. Chacune de ces pièces revêt une fonction différente. En effet, le support doit permettre d'effectuer la liaison entre le pulvérisateur et le robot. De plus, il doit permettre le guidage de tuyaux d'acheminement de fluides, le guidage et le bridage de tuyaux d'acheminement d'air et de supporter une unité haute tension.

Les documents FR 2 644 322 A1 et CN 108 372 057 A décrivent des supports pour des pulvérisateurs.

La fabrication et l'assemblage de diverses pièces induit un coût important, ainsi qu'une opération de montage relativement longue et complexe.

C'est à cet inconvénient qu'entend remédier l'invention en proposant un support pour pulvérisateur bon marché et facile à monter.

A cet effet, l'invention concerne un support pour pulvérisateur comprenant un logement pour une unité haute tension ou une prise haute tension, un élément de guidage pour au moins un tuyau d'acheminement de produit de revêtement, un élément de retenue pour des tuyaux d'air, un premier élément de fixation à un robot et un second élément de fixation à un pulvérisateur. Selon l'invention, le logement, l'élément de guidage, l'élément de retenue, le premier élément de fixation et le second élément de fixation sont monoblocs.

Grâce à l'invention, la fabrication d'un seul tenant du support permet de réduire les coûts de fabrication et de faciliter le montage de la pièce avec un robot et un pulvérisateur.

Selon des caractéristiques avantageuses mais non obligatoires de l'invention, un tel support peut comprendre une ou plusieurs des caractéristiques suivantes, prises selon toute combinaison techniquement admissible :
- Le support est façonné grâce à un procédé de fabrication additive.
- Le support est fabriqué matériau synthétique, de préférence en polyamide 12, en polyoxyméthylène, en polyétheréthercétone ou en polytéréphtalate d'éthylène.
- Le support comprend également un logement pour une unité basse tension, également monobloc avec le reste du support.
- Le premier élément de fixation, l'élément de retenue et le second élément de fixation sont alignés, dans cet ordre, le long d'un axe du support.
- Le logement pour l'unité ou la prise haute tension est un cylindre de révolution aligné avec l'axe du support.
- Le logement pour l'unité ou la prise haute tension est situé entre le premier élément de fixation et le second élément de fixation, l'élément de guidage est centré sur l'axe du support, l'élément de guidage a un rayon intérieur de valeur supérieure à une valeur du rayon extérieur du logement pour l'unité ou la prise haute tension et, de préférence, la différence entre la valeur du rayon intérieur de l'élément de guidage et la valeur du rayon extérieur du logement de l'unité haute tension est comprise entre 0,1 mm et 2 mm, de préférence de l'ordre de 0,5 mm.
- Le support comprend des marques d'identification des tuyaux d'air.

Selon un autre aspect, l'invention concerne également un dispositif de pulvérisation comprenant un pulvérisateur, un robot, ainsi qu'un support pour pulvérisateur, le pulvérisateur étant relié au robot par le support pour pulvérisateur. Selon l'invention, le support pour pulvérisateur est tel que décrit ci-dessus.

Ce dispositif induit les mêmes avantages que ceux cités à propos du support.

Selon des caractéristiques avantageuses mais non obligatoires de l'invention, un tel dispositif peut comprendre des tuyaux d'air maintenus en place par l'élément de retenue et au moins un tuyau d'acheminement de produit de revêtement guidé par l'élément de guidage.

Selon encore un autre aspect, l'invention concerne également un procédé de fabrication d'un support tel que mentionné ci-dessus, caractérisé en ce qu'il s'agit d'un procédé de fabrication additive par fusion à jets multiples.

L'invention sera mieux comprises et d'autres avantages de celle-ci apparaîtront plus clairement à la lumière de la description qui va suivre d'un mode de réalisation d'un support pour pulvérisateur et d'un dispositif de pulvérisation conformes à son principe, donnée uniquement à titre d'exemple et faite en référence aux dessins, dans lesquels :
[Fig 1] la figure 1 est une vue en perspective de dessous d'un dispositif de pulvérisation conforme à l'invention comprenant un support pour pulvérisateur, également conforme à l'invention ;
[Fig 2] la figure 2 est une vue de derrière du support de la figure 1 ;
[Fig 3] la figure 3 est une vue de dessus du support des figures 1 et 2 ; et

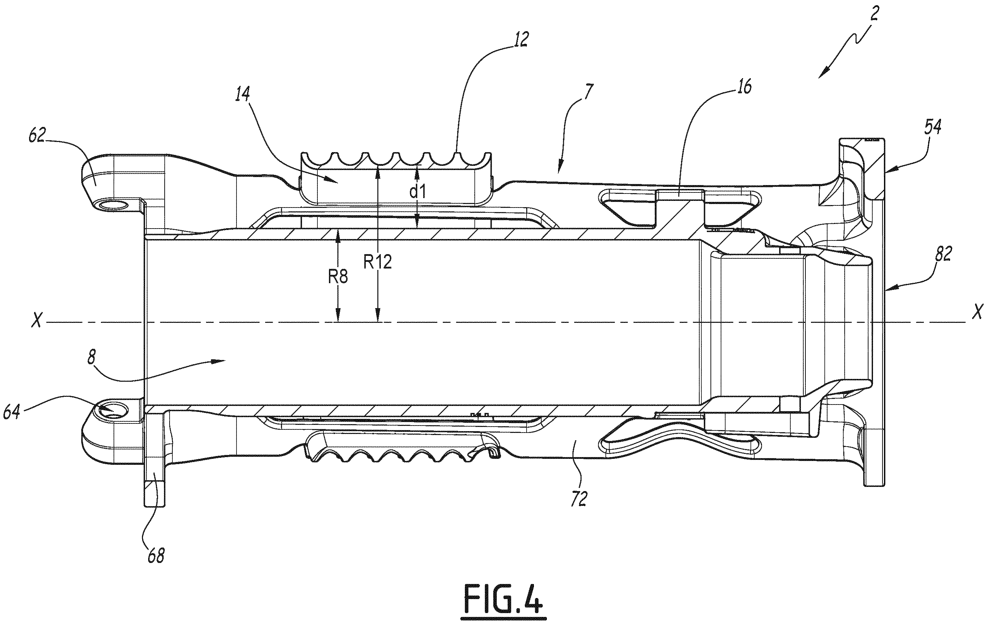

[Fig 4] la figure 4 est une coupe selon le plan IV à la figure 1.

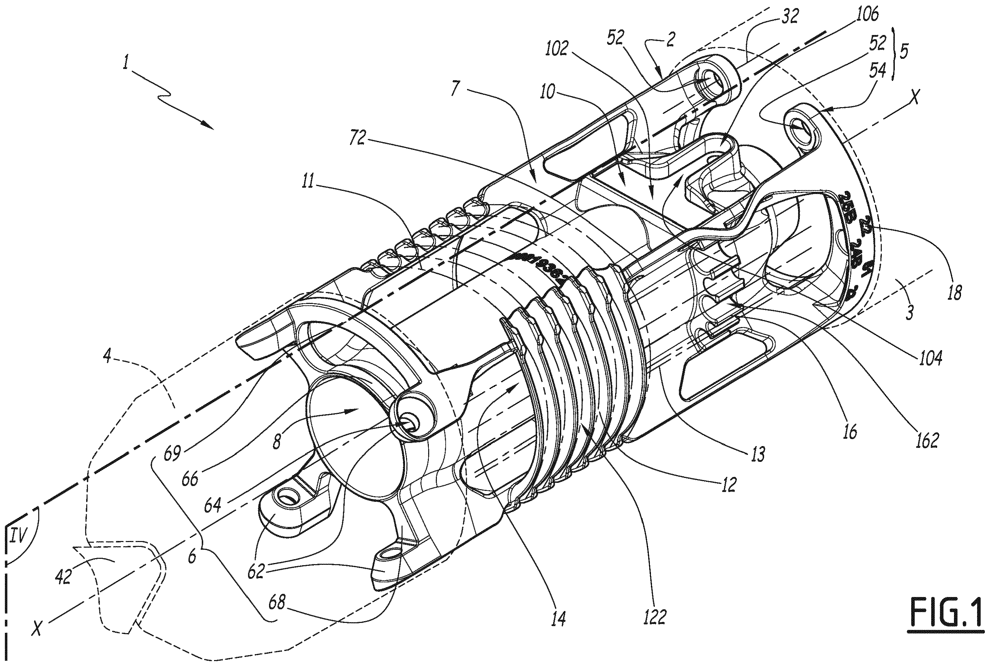

Un dispositif de pulvérisation 1 est partiellement représenté sur la figure 1. Ce dispositif 1 comprend un support 2, un robot 3 qui peut, par exemple, être un robot réciprocateur, ainsi qu'un pulvérisateur 4 muni d'au moins une buse 42 pour pulvériser un fluide. Pour plus de clarté, seule une partie du robot 3 est représentée, à savoir l'extrémité d'un bras de manipulation. Le robot 3 et le pulvérisateur 4 sont représentés transparents et en pointillés sur la figure 1 et ne sont pas représentés sur les autres figures.

Le support 2 définit un axe longitudinal X, sur lequel sont alignés le robot 3 et le pulvérisateur 4.

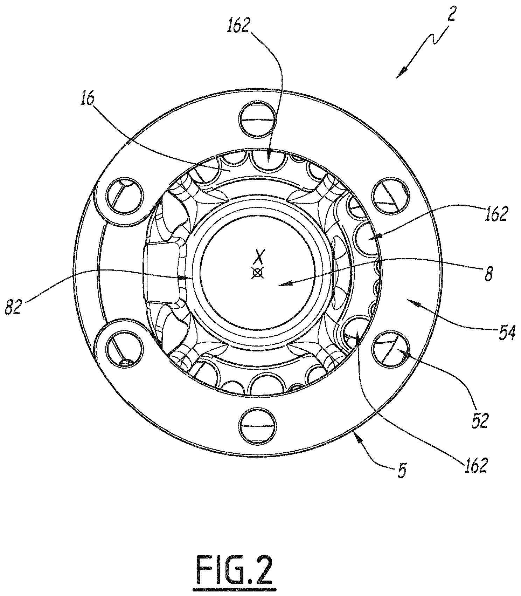

Le support 2 comprend, à l'une de ses extrémités, dite distale, un élément de fixation 5 au robot 3. Comme mieux visible sur la figure 2, cet élément de fixation 5 a une forme de fer à cheval, centré sur l'axe X, qui comprend des perçages 52 destinés à recevoir des vis 32 de fixation au robot 3, représentées par des traits d'axe à la figure 1. Dans l'exemple des figures, l'élément de fixation 5 comprend six perçages 52. L'élément de fixation 5 comprend également une surface d'appui 54 servant à positionner le support 2 sur le robot 3.

A son extrémité proximale, opposée à l'extrémité distale, le support 2 comprend un élément 6 de liaison au pulvérisateur 4. L'élément de fixation 6 comprend quatre pieds 62, chacun de ces pieds étant pourvu d'un orifice 64 pour le passage d'une vis pour la fixation du pulvérisateur 4 au support 2. Les pieds 62 sont reliés, par des ponts 68, à une bague 66 centrée sur l'axe X, les pieds 62 étant répartis régulièrement autour d'un cercle centré sur l'axe X et dont le diamètre est supérieur au diamètre de la bague 66. En outre, deux des pieds 62, dirigés vers le bas du support 2, sont reliés par un arc 69 dont la fonction est de positionner précisément un plan de pose non représenté sur les figures. Le plan de pose appartient au dispositif 1 et maintien des raccords destinés à acheminer le fluide et de l'air vers le pulvérisateur 4.

Les éléments 5 et 6 du support 2 sont reliés par un cadre 7 qui forme une base du support 2. Le cadre 7 comprend quatre montants 72, chacun des montants 72 partant de l'un des pieds 62 pour rejoindre l'élément de fixation 5. Les montants 72 sont substantiellement rectilignes et parallèles à l'axe X.

Ainsi, grâce aux éléments 5, 6 et 7, le support 2 permet d'effectuer une liaison entre le robot 3 et le pulvérisateur 4.

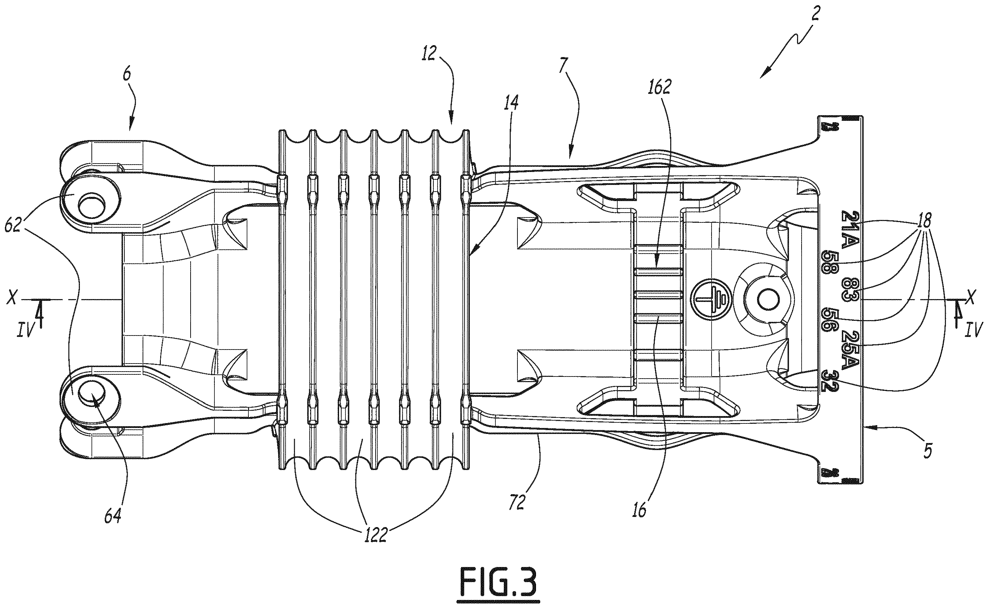

La bague 66 est prolongée le long de l'axe X, en direction de l'élément de fixation 5, par un logement 8 de réception d'une unité haute tension non représentée. Ce logement 8 est un cylindre creux, dans l'exemple à base circulaire, dont l'une des extrémités est formée par la bague 66 et l'autre extrémité 82 se situe dans le plan de la surface d'appui 54. Le logement 8 est mieux visible sur la figure 3.

Comme visible sur la figure 1, un logement 10 est prévu pour unité basse tension, également non représentée. Ce logement 10 est fixé sous le logement 8 et comprend un espace 102, orthogonal à l'axe X, ainsi qu'un prolongement 104 parallèle à l'axe X. L'espace 102 et le prolongement 104 forment un unique volume de réception de l'unité basse tension, ce volume ayant une forme de T vue de dessous, selon une direction radiale à l'axe X. A l'extrémité du prolongement 104, un perçage 106 permet le passage d'un câble de connexion de l'unité basse tension avec l'unité haute tension.

En fonctionnement, l'unité haute tension est placée dans le logement 8. Cette unité haute tension est alimentée par un courant de basse tension fourni par l'unité basse tension. L'unité haute tension est usuellement composée de diodes permettant d'élever la tension du courant fourni par l'unité basse tension. L'unité basse tension est également utilisée pour relier l'ensemble formé par l'unité haute tension et l'unité basse tension à une masse. Pour relier l'unité haute tension et l'unité basse tension, en général, l'unité haute tension est munie d'une prise femelle compatible avec une prise mâle d'un connecteur appartenant à l'unité basse tension. Ce dispositif, formé des unités basse et haute tension, permet d'alimenter le pulvérisateur 4 en courant haute tension afin de charger des particules de peinture à pulvériser sortant de la buse 42, dans le cadre d'une application de produit de revêtement par voie électrostatique.

Le produit de revêtement à appliquer au moyen du pulvérisateur est amené au pulvérisateur 4 par deux tuyaux d'acheminement 11, représentés par des traits d'axe sur la figure 1, guidés par un élément de guidage 12. Le fluide peut, par exemple, être un produit de revêtement tel qu'une peinture. L'élément de guidage 12 décrit une portion de cylindre centrée sur l'axe X et entourant en partie le logement 8. L'élément de guidage 12 est ouvert sur le dessous du support 2. En pratique, l'élément de guidage 12 est ouvert sur un angle compris entre 20° et 90° autour de l'axe X. De préférence, cet angle est de 65°. L'élément de guidage 12 comprend des creux 122, prévus pour maintenir les tuyaux 11, disposés, de préférence, en quinconce sur l'élément de guidage 12. Par « en quinconce », on entend que les deux tuyaux sont disposés alternativement dans les creux 122, sur la longueur de l'élément de guidage. Dans l'exemple des figures, l'élément de guidage 12 comprend six creux 122. Le guidage des tuyaux d'acheminement 11 dans ces creux 122 permet d'isoler électriquement les différents tuyaux entre eux pour qu'ils n'entrent pas en contact. En effet, un tel contact pourrait créer, localement, un arc dû à une différence de potentiel entre deux fluides ayant chacun leur résistivité propre et contenus dans les deux tuyaux.

Le produit contenu dans les tuyaux d'acheminent 11 étant porté à haute tension à proximité d'une tête du pulvérisateur 4 et mis à la masse à proximité du robot 3, il est nécessaire d'avoir une longueur suffisante de tuyaux d'acheminement 11 afin d'éviter tout rampage électrique. L'enroulement des tuyaux 11 autour de l'élément de guidage 12 permet d'augmenter la longueur des tuyaux d'acheminement 11 tout en limitant l'encombrement global du support 2. La longueur des tuyaux d'acheminement 11 dépend de la résistivité des fluides acheminés par ces tuyaux 11 et de la tension souhaitée. Par exemple, pour un fluide ayant une résistivité de 3 MOhm.cm et une tension de 100kV, il est nécessaire d'avoir des tuyaux d'acheminement 11 de 850 mm. A tension égale, plus la résistivité du fluide utilisé est grande, moins les tuyaux d'acheminement 11 doivent être longs.

De plus, l'enroulement des tuyaux 11 autour de l'élément de guidage 12 permet d'éviter que des paillettes métalliques contenues dans certains fluides ne s'orientent dans la direction du champ électrique généré par l'unité haute tension. Ceci évite de générer un court-circuit intrinsèque au fluide.

En pratique, afin que la longueur des tuyaux d'acheminement 11 soit suffisante et que l'encombrement du support 2 soit optimisé, l'élément de guidage 12 a un diamètre intérieur supérieur au diamètre extérieur du logement 8. En pratique, la distance d1 séparant le logement 8 et l'élément de guidage 12 est égale à la différence entre une valeur du rayon intérieur R12 de l'élément de guidage 12 et une valeur du rayon extérieur R8 du logement 8. Cette distance d1 est comprise entre 0,1 mm et 2 mm. De préférence, cette distance d1 est de 0,5 mm. Ainsi, un espace 14 d'épaisseur radiale d1 est formé entre l'élément de guidage 12 et le logement 8. Cet espace 14 est utilisé pour faire passer des tuyaux d'air 13 du robot 3 jusqu'au pulvérisateur 4. Ces tuyaux d'air 13, représentés par des traits d'axe sur la figure 1, sont utilisés pour alimenter une jupe d'air de conformation du jet de produit de revêtement sortant de la buse 42 du pulvérisateur 4, pour alimenter des vannes du pulvérisateur 4 et, éventuellement, pour alimenter et/ou freiner une turbine du pulvérisateur 4.

Afin de maintenir les tuyaux d'air 13 en place, un élément de retenue 16 est disposé sur l'extérieur du logement 8, entre l'élément de fixation 5 et l'élément de guidage 12. L'élément de retenue 16 décrit une portion de cercle autour du logement 8. Cette portion de cercle est délimitée par le logement 10 et comprend un logement 162 pour chaque tuyau d'air 13. Dans l'exemple des figures, l'élément de guidage comprend quinze logements 162 répartis autour de l'axe X pour accueillir quinze tuyaux d'air, seuls certains de ces logements étant visibles aux figures 1 à 3.

En pratique, le nombre de logements 162 n'est pas forcément égal à quinze. Par exemple, l'élément de guidage 12 peut comprendre jusqu'à vingt-cinq logements 162 ou, au contraire moins de dix tels logements. Afin d'identifier les tuyaux d'air 13, des marques d'identification 18 sont gravées sur l'extérieur de l'élément de fixation 5. Ainsi, les tuyaux 13 sont fixés, chacun, dans un logement 162, et longent ensuite le logement 8, en étant facilement repérables. Ils sont donc parallèles à l'axe X et chaque tuyau d'air passe à travers l'élément de fixation 5, sous l'une des marques d'identification 18. La forme de l'élément de guidage 16 permet de fixer rapidement les tuyaux d'air avant leur raccordement au pulvérisateur 4, en les clipsant à l'élément de guidage 16.

Pour avoir un support 2 compact, il est façonné grâce à un procédé de fabrication additive. Ainsi, les logements 8 et 10, les éléments de liaison 5 et 6 et les éléments de support et de retenue 12 et 16 sont monoblocs. En d'autres termes, le support 2 est fabriqué d'un seul tenant venu de matière.

Contrairement à un assemblage de pièces différentes, le procédé de fabrication additive, qui peut, par exemple, être un procédé de fabrication par fusion à jets multiples MJF (de l'anglais Multi Jet Fusion), permet d'optimiser l'encombrement du support 2, notamment en permettant de placer l'élément de retenue 16 entre l'élément de guidage 12 et l'élément de fixation 5. Le procédé de fabrication par fusion à jets multiples consiste à appliquer, pour chaque couche de la pièce à créer, un liant et un agent détaillant, dont la fonction est de lisser une surface, sur une surface à fusionner d'une poudre. Ensuite, un agent liquide est déposé afin de fusionner les particules désirées. Enfin, chaque couche de matériau est chauffée afin de former la pièce.

De plus, les marques d'identification 18 sont intégrées directement au support 2 au cours de sa fabrication. Il n'y a donc pas besoin d'effectuer une étape supplémentaire pour les graver dans la pièce. Cela permet de gagner du temps supplémentaire lors de la fabrication du support 2 qui a donc un coût minoré.

Afin de garder un coût de fabrication faible, tout en ayant de bonnes propriétés mécaniques, le support 2 est fabriqué en matériau synthétique, de préférence en polyamide 12. En effet, l'utilisation combinée de la fabrication additive avec le polyamide 12 permet d'avoir un support 2 léger et résistant aux solvants utilisés dans une installation de projection de produit de revêtement.

En variante, le support 2 peut être fabriqué, par exemple, en polyoxyméthylène, en polyétheréthercétone ou en polytéréphtalate d'éthylène.

Selon une autre variante, l'élément de fixation 5 de liaison au pulvérisateur comprend un nombre différent de perçages 52, par exemple 3 ou 10.

En variante, le dispositif de pulvérisation comprend un nombre différent de tuyaux 11 d'acheminement de produit de revêtement au pulvérisateur 4, par exemple un ou 3. En général, le nombre de tuyaux d'acheminement 11 varie entre 1 et 4. Chaque tuyau d'acheminement 11 peut également être utilisé pour y faire circuler un produit de rinçage ou un solvant.

En variante, le nombre de pieds 62 et le nombre de montants 72 peuvent varier. Par exemple, le support peut comprend cinq pieds 62 et cinq montants 72 ou trois pieds 62 et six montants 72.

En variante, l'unité haute tension est remplacée par une prise haute tension, alimentée directement en courant haute tension. Dans ce cas, à la place de l'unité basse tension, un connecteur permet de relier l'unité haute tension à la masse.

En variante, l'élément de guidage 12 peut comprendre un nombre différent de creux 122, par exemple quatre ou huit.

Le mode de réalisation et les variantes mentionnés ci-dessus peuvent être combinés entre eux pour générer de nouveaux modes de réalisation de l'invention.

## Revendications

1. Support (2) pour pulvérisateur comprenant un logement (8) pour une unité ou une prise haute tension, un élément de guidage (12) pour au moins un tuyau (11) d'acheminement de produit de revêtement, un élément de retenue (16) pour des tuyaux d'air (13), un premier élément de fixation (5) à un robot (3) et un second élément de fixation (6) à un pulvérisateur (4), **caractérisé en ce que** le logement (8), l'élément de guidage (12), l'élément de retenue (16), le premier élément de fixation (5) et le second élément de fixation (6) sont monoblocs.

2. Support (2) la revendications précédente, **caractérisé en ce qu'**il est fabriqué matériau synthétique, de préférence en polyamide 12, en polyoxyméthylène, en polyétheréthercétone ou en polytéréphtalate d'éthylène

3. Support (2) selon l'une quelconque des revendications précédentes, **caractérisé en ce qu'**il comprend également un logement (10) pour une unité basse tension, également monobloc avec le reste du support.

4. Support (2) selon l'une quelconque des revendications précédentes, caractérisé en ce le premier élément de fixation (5), l'élément de retenue (16) et le second élément de fixation (6) sont alignés, dans cet ordre, le long d'un axe (X) du support.

5. Support (2) selon la revendication 4, **caractérisé en ce que** le logement (8) pour l'unité ou la prise haute tension est un cylindre de révolution aligné avec l'axe (X) du support.

6. Support (2) selon la revendication 5, **caractérisé en ce que** le logement (8) pour l'unité ou la prise haute tension est situé entre le premier élément de fixation (5) et le second élément de fixation (6), **en ce que** l'élément de guidage (12) est centré sur l'axe (X) du support, **en ce qu'**il a un rayon intérieur (R12) de valeur supérieure à une valeur du rayon extérieur (R8) du logement (8) pour l'unité ou la prise haute tension et **en ce que**, de préférence, la différence (d1) entre la valeur du rayon intérieur de l'élément de guidage et la valeur du rayon extérieur du logement de l'unité haute tension est comprise entre 0,1 mm et 2 mm, de préférence de l'ordre de 0,5 mm.

7. Support (2) selon l'une quelconque des revendications précédentes, **caractérisé en ce qu'**il comprend des marques (18) d'identification des tuyaux d'air (13).

8. Dispositif (1) de pulvérisation comprenant un pulvérisateur (4), un robot (3), ainsi qu'un support (2) pour pulvérisateur, le pulvérisateur étant relié au robot par le support pour pulvérisateur, **caractérisé en ce que** le support pour pulvérisateur (2) est selon l'une quelconque des revendications précédentes.

9. Dispositif (1) selon la revendication 8, **caractérisé en ce qu'**il comprend des tuyaux d'airs (13) maintenus en place par l'élément de retenue (16) et au moins un tuyau (11) d'acheminement de produit de revêtement guidé par l'élément de guidage (12).

10. Procédé de fabrication d'un support (2) selon l'une des revendications 1 à 7, **caractérisé en ce qu'**il s'agit d'un procédé de fabrication additive par fusion à jets multiples.

## Patentansprüche

1. Halterung (2) für Sprühgerät, umfassend ein Gehäuse (8) für eine Hochspannungseinheit oder -anschluss, ein Führungselement (12) für mindestens einen Schlauch (11) zum Zuführen von Beschichtungsprodukt, ein Halteelement (16) für Luftschläuche (13), ein erstes Befestigungselement (5) an einem Roboter (3) und ein zweites Befestigungselement (6) an einem Sprühgerät (4), **dadurch gekennzeichnet, dass** das Gehäuse (8), das Führungselement (12), das Halteelement (16), das erste Befestigungselement (5) und das zweite Befestigungselement (6) aus einem Stück sind.

2. Halterung (2) nach dem vorherigen Anspruch, **dadurch gekennzeichnet, dass** er aus synthetischem Material, vorzugsweise aus Polyamid 12, Polyoxymethylen, Polyetheretherketon oder Polyethylenterephthalat gefertigt ist.

3. Halterung (2) nach einem der vorherigen Ansprüche, **dadurch gekennzeichnet, dass** sie auch ein Gehäuse (10) für eine Niederspannungseinheit umfasst, das auch einstückig mit dem Rest der Halterung ist.

4. Halterung (2) nach einem der vorherigen Ansprüche, **dadurch gekennzeichnet, dass** das erste Befestigungselement (5), das Halteelement (16) und das zweite Befestigungselement (6) in dieser Reihenfolge entlang einer Achse (X) der Halterung ausgerichtet sind.

5. Halterung (2) nach Anspruch 4, **dadurch gekennzeichnet, dass** das Gehäuse (8) für die Hochspannungseinheit oder -anschluss ein Drehzylinder ist, der mit der Achse (X) der Halterung ausgerichtet ist.

6. Halterung (2) nach Anspruch 5, **dadurch gekennzeichnet, dass** das Gehäuse (8) für die Hochspannungseinheit oder -anschluss zwischen dem ersten Befestigungselement (5) und dem zweiten Befestigungselement (6) angeordnet ist, dass das Führungselement (12) auf der Achse (X) der Halterung zentriert ist, dass es einen Innenradius (R12) mit einem Wert aufweist, der größer ist als ein Wert des Außenradius (R8) des Gehäuses (8) für die Hochspannungseinheit oder -anschluss, und dass vorzugsweise die Differenz (d1) zwischen dem Wert des Innenradius des Führungselements und dem Wert des Außenradius des Gehäuses für die Hochspannungseinheit zwischen 0,1 mm und 2 mm, vorzugsweise in der Größenordnung von 0,5 mm, ist.

7. Halterung (2) nach einem der vorherigen Ansprüche, **dadurch gekennzeichnet, dass** es Markierungen (18) zum Identifizieren von Luftschläuchen (13) umfasst.

8. Sprühvorrichtung (1), umfassend ein Sprühgerät (4), einen Roboter (3) und eine Halterung (2) für das Sprühgerät, wobei das Sprühgerät über die Halterung für das Sprühgerät mit dem Roboter verbunden ist, **dadurch gekennzeichnet, dass** die Halterung für das Sprühgerät (2) nach einem der vorherigen Ansprüche ist.

9. Vorrichtung (1) nach Anspruch 8, **dadurch gekennzeichnet, dass** sie Luftschläuche (13), die durch das Halteelement (16) in Position gehalten werden, und mindestens einen Schlauch (11) zum Fördern von Beschichtungsprodukt, das durch das Führungselement (12) geführt wird, umfasst.

10. Verfahren zum Herstellen einer Halterung (2) nach einem der Ansprüche 1 bis 7, **dadurch gekennzeichnet, dass** es sich um ein additives Fertigungsverfahren durch Mehrstrahlschmelzen handelt.

## Claims

1. A sprayer support (2) comprising a housing (8) for a high-voltage unit or plug, a guiding member (12) for at least one coating product hose (11), a retention member (16) for air hoses (13), a first fastening member (5) for fastening to a robot (3), a second fastening member (6) for fastening to a sprayer (4), **characterized in that** the housing (8), the guiding member (12), the retention member (16), the first fastening member (5), and the second fastening member (6) are formed from a single part.

2. A support (2) according to the previous claim, **characterized in that** it is manufactured from a synthetic material, preferably polyamide 12, polyoxymethylene, polyetheretherketone, or polyethylene terephthalate.

3. A support (2) according to any one of the preceding claims, **characterized in that** it further comprises a housing (10) for a low-voltage unit, which is also formed of the same part as the rest of the support.

4. A support (2) according to any one of the preceding claims, **characterized in that** the first fastening member (5), the retention member (16), and the second fastening member (6) are aligned **in that** order along an axis (X) of the support.

5. A support (2) according to any one of the preceding claims, **characterized in that** the housing (8) for the high-voltage unit or plug is a cylinder aligned with the axis (X) of the support.

6. A support (2) according to any one of the preceding claims, **characterized in that** the housing (8) for the high-voltage unit or plug is located between the first fastening member (5) and the second fastening member (6), **in that** the guiding member (12) is centered on the axis (X) of the support, **in that** the guiding member has an inner radius (R12) with a value greater than a value of the outer radius (R8) of the housing (8) for the high-voltage unit or plug, and **in that** preferably, the difference (d1) between the value of the inner radius of the guiding member and the value of the outer radius of the housing for the high-voltage unit is between 0.1 mm and 2 mm, and preferably on the order of 0.5 mm.

7. A support (2) according to any one of the preceding claims, **characterized in that** it comprises marks (18) for identifying the air hoses (13).

8. A spraying device (1) comprising a sprayer (4), a robot (3), and a sprayer support (2), the sprayer being connected to the robot by the sprayer support, **characterized in that** the sprayer support (2) is according to one of the preceding claims.

9. A spraying device (1) according to claim 8, **characterized in that** it comprises air hoses (13) held in place by the retention member (16) and at least one coating product hose (11) guided by the guiding member (12).

10. A method for manufacturing a support (2) according to one of the claims 1 to 7, **characterized in that** it is a multijet fusion additive manufacturing method.
